(19) Europäisches Patentamt

European Patent Office

Office européen des brevets

(11) Publication number: **0 037 686**

**B1**

(12) **EUROPEAN PATENT SPECIFICATION**

(45) Date of publication of patent specification: **01.06.88**

(21) Application number: **81301322.4**

(22) Date of filing: **27.03.81**

(51) Int. Cl.⁴: **C 08 L 27/06, C 08 L 33/12, C 08 L 67/00, C 08 L 25/12, C 08 L 51/04, C 08 L 69/00, C 08 L 33/00**

(54) **Impact modifier compositions, their production and thermoplastic polymer compositions containing them.**

(30) Priority: **31.03.80 US 135945**

(43) Date of publication of application:
**14.10.81 Bulletin 81/41**

(45) Publication of the grant of the patent:
**01.06.88 Bulletin 88/22**

(84) Designated Contracting States:
**AT BE CH DE FR GB IT LI NL SE**

(56) References cited:
**WO-A-80/00707**
**FR-A-2 167 677**
**FR-A-2 311 802**
**GB-A-1 182 537**

**CHEMICAL ABSTRACTS, vol. 80, no. 8, 25th February 1974, page 35, no. 37905b, Columbus Ohio (USA);**

(73) Proprietor: **Rohm and Haas Company**
**Independence Mall West**
**Philadelphia, Pennsylvania 19105 (US)**

(72) Inventor: **Dunkelberger, David Lamar**
**R.D. No.1, Box 523**
**Newtown, PA 18940 (US)**

(74) Representative: **Angell, David Whilton et al**
**ROHM AND HAAS (UK) LTD.**
**European Operations Patent Department**
**Lennig House 2 Mason's Avenue**
**Croydon CR9 3NB (GB)**

Courier Press, Leamington Spa, England.

**Description**

This invention is concerned with impact modifier compositions, their production and thermoplastic polymer compositions containing them.

Rigid thermoplastic polymers are widely used in the production of plastics articles, but for many uses it is desirable to improve their impact strength, processability, clarity, colour, taste, odour and other properties. For improved strength, the use of elastomeric impact modifier polymers as additives is widely known. In using such impact modifiers, the importance of dispersing them well through the thermoplastic is known. Advances in dispersability of such impact modifiers in rigid thermoplastics have been achieved by design of the polymeric structure of the impact modifiers, such as the multiple stage polymerisation products, chemical structure variations and varying amounts of the different stages. Also, it is known that lumps of impact modifier polymer particles which do not break down during melt processing can form gels in the final product and these are visible and detract from optimum impact modification efficiency.

To overcome these problems it has been suggested in GB—1182537 that the impact modifier comprises a blend of 20 to 70% by weight of an elastomeric impact modifier polymer (A) of styrene, n-butyl acrylate and butadiene-1,3 and 80 to 20% by weight of polymer (B) of styrene and methyl methacrylate and/or acrylonitrile. It was believed that the elastomeric impact modifier polymer content of the blend was critical; for example below 20% elastomeric impact modifier polymer the impact strength of the thermoplastic polymer is poor, and above 70% elastomeric impact modifier polymer the final product has poor rigidity and surface properties.

Surprisingly, we have now found certain impact modifier compositions where the elastomeric impact modifier polymer content exceeds 70% without adversely affecting the final product and has a reduced tendency to form gel colonies of impact modifier and so has desirable dispersibility properties.

The impact modifier compositions of this invention comprise blends of (a) elastomeric impact modifier polymer and (b) polymer, other than methyl methacrylate homopolymer, of at least one of the following monomers:

esters of acrylic acid, esters of methacrylic acid, vinyl aromatic monomers such as styrene and substituted styrenes, olefins, and esters of unsaturated organic acids, in a weight ratio of (a) to (b) of 99.5:0.5 to 96:4. The function of polymers (b) is to substantially reduce gel colonies of impact modifier in rigid thermoplastic polymer formulations. Consequently the invention also provides compositions comprising rigid thermoplastic polymer containing the impact modifier compositions of the invention and processes for making the impact modifier compositions by intimately mixing components (a) and (b) in the indicated weight ratios.

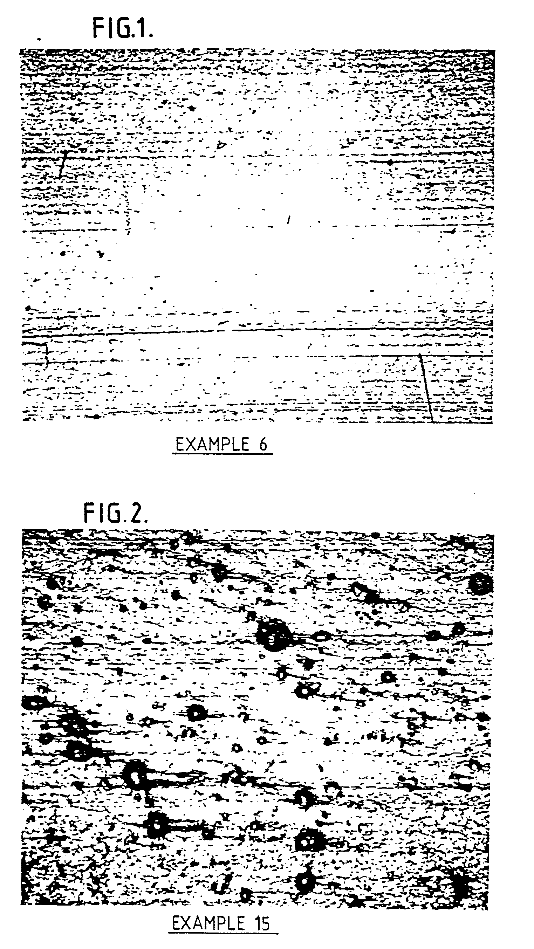

Fig. 1 is a photomicrograph taken at 13.5× power of the product produced in accordance with the invention in Example 6.

Fig. 2 is a photomicrograph taken at 13.5× power of the control produced in comparative Example 15.

The elastomeric impact modifier polymers which are used in this invention are usually core-shell polymers, i.e., multiple stage polymers having two or more stages, and can be for example, methacrylate-butadiene-styrene (MBS), acrylonitrile-butadiene-styrene (ABS), alkyl acrylate-alkyl methacrylate types, alkyl acrylate-styrene-acrylonitrile types, acrylic elastomer-based core-shell polymers and mixed acrylic-butadiene-based elastomer core-shell polymers. Such impact modifiers as these are more fully described in U.S. Patents 2,802,809; 3,678,133; 3,251,904; 3,793,402; 2,943,074; 3,671,610; and 3,899,547.

The component (b), sometimes herein referred to as a "dunkelsperser", is preferably a polymer of at least one of the following monomers:

$(C_1$ to $C_8)$-alkyl and $(C_6$ to $C_9)$-cycloalkyl acrylates and methacrylates, styrene, alpha methyl styrene, ethylene, propylene, and vinyl acetate. Most preferred dunkelsperser polymers are poly(butyl acrylate), poly(butyl methacrylate), poly(butyl methacrylate/styrene), poly(butyl acrylate/styrene), poly(butyl acrylate/methyl methacrylate), poly(butyl acrylate/butyl methacrylate), and poly(ethyl acrylate). Other examples are poly(vinyl acetate), poly(ethylene/vinyl acetate), polystyrene, poly(methyl methacrylate), poly(alpha methyl styrene) and poly(ethyl methacrylate).

The molecular weight range of suitable dunkelspersers is wide, but depends on the particular polymer used. For example, with poly(butyl acrylate), poly(butyl methacrylate), and poly(ethyl acrylate), the suitable molecular weight range is about 15,000 to 10,000,000, weight average, or they may even be cross-linked. A test for indicating the suitability of a particular polymer for use as a dunkelsperser is given later in this specification.

The dunkelsperser is intimately blended with the impact modifier polymer to form the impact modifier compositions of the invention. Any method of making a very thorough, intimate mixture of the dunkelsperser and usually powder impact modifier polymer is suitable. However simple admixture of impact modifier powder and dunkelsperser will usually be insufficient unless intimate, thorough mixing is achieved. Another method of forming the compositions of the invention is to emulsion polymerise the dunkelsperser in the presence of the latex of the impact modifier polymer formed by emulsion polymerisation. Our presently preferred method is to separately prepare emulsions of impact modifier polymer and dunkelsperser, mix the emulsions, and then coisolate the two polymers by spray drying or coagulation. Spray drying is described in detail in Spray Drying, *An Introduction to Principles, Operational*

*Practices, and Applications,* K. Masters, CRC Press, Cleveland, Ohio (1972). Coagulation comprises salting out the stabilizing surface active agent from the emulsion by slowly adding the polymer emulsion to, for example twice is volume of electrolyte solution containing any one or more of a number of salts and/or acids such as NaCl, KCl, $CaCl_2$, $Na_2SO_4$, $MgSO_4$, acetic acid, oxalic acid, HCl, $HNO_3$, $H_2SO_4$ and $H_3PO_4$. The polymer may then be separated by filtration and washed several times with fresh water to remove excess electrolyte, and then dried.

The impact modifiers and dunkelsperser can also be isolated from the emulsion by evaporation or freeze drying. When following the preferred method, it is important that the two emulsions be compatible. For instance, the soaps should be similar or the same, i.e., of the same ionic species and of similar water solubility or HLB (hydrophile/lipophile balance).

The dunkelsperser is generally a single stage polymer which is intentionally separately prepared as distinct particles and then blended with the impact modifier polymer. It is not to be confused with any ungrafted polymer which unintentionally forms during preparation of multiple stage impact modifier polymers, since such unintentional polymer does not function to reduce gel formation and is thus not within the scope of this invention.

The preferred weight ratio of impact modifier polymer to dunkelsperser in the compositions of the invention is 99/1 to about 97/3, and the optimum weight ratio for certain dunkelspersers and certain impact modifiers is about 98/2.

Among rigid thermoplastic matrix polymers which may be modified using the compositions of the invention are homopolymers and copolymers of vinyl chloride copolymers, of methyl methacrylate, thermoplastic polyesters such as the polyalkylene terephthalate series, for example polyethylene terephthalate, polybutylene terephthalate and polycyclohexylene terephthalate. Also, ABS, high impact polystyrene, polycarbonate, and polyglutarimides are examples of rigid thermoplastics which may be modified according to this invention.

The weight ratio of rigid thermoplastic matrix polymer to impact modifier composition may be the same as used with conventional impact modifiers. Normally this ratio is 60/40 to 98/2 by weight.

Other standard additives may be used to make up the formulation of the impact modified rigid thermoplastic. For example, processing aids, colorants, pigments, plasticizers, stabilizers, and lubricants may be included.

After formulating by standard techniques, the formulation may be melt processed, also by standard techniques, to form a substantially gel-free compound in which the impact modifier is extremely well dispersed and, in some cases, greater impact efficiency may be obtained.

Some preferred emodiments of the invention are given in the following Examples. As comparative tests there are also given details of unmodified, i.e. conventional elastomers and details of tests in which the candidate as dunkelsperser fails the gel count test previously mentioned and detailed below. All parts and percentages are by weight unless otherwise indicated.

Candidate dunkelsperser polymers of varying compositions are prepared in emulsion using the following ingredients and procedure.

| Charges: | | Parts: |
|---|---|---|
| A— | water @ pH=10 adjusted using NaoH | 397.5 |
| B— | sodium stearate | 0.26 |
| B1— | sodium stearate | 1.49 |
| | monomers | 212.6 |
| C | t-dodecyl mercaptan as mercaptan chain transfer agent or BDA as difunctional monomer | Varied |
| D | initiator | 1.1 |
| | Water | 63.3 |
| | Theory solids | 32.4% |

Procedure:

Charge the water (A) to a one litre four-neck flask fitted with a stirrer, thermometer, nitrogen inlet and a condenser. The water is heated to 65°C while sweeping with nitrogen. At 65°C the first emulsifier charge (B) is added and allowed to stir for 10 minutes. The KPS initiator (D) is added followed by 15% of the monomer(s) and ingredients (C) and the temperatures maintained at 65°C until an exotherm is observed.

At this point the second emulsifier charge (B1) is added followed by the gradual addition of the balance of the monomers and ingredients (C) over a one hour period. After completion of the monomer feed, the batch is maintained at 65°C for 15 minutes then cooled to room temperature.

**0 037 686**

A PVC masterbatch formulation, without impact modifier, of the following ingredients

| | | |
|---|---|---|
| PVC (K-55) Resin | 100 | parts |
| Sulfur containing organic tin stabilizer | 2.0 | parts |
| Glycerol monostearate | 0.75 | parts |
| Partially saponified montan wax | 0.75 | parts |
| Blue organic toner | 0.0004 | parts |

is prepared in a high intensity Prodex-Henschel blender. The subject impact modifier powders are added (at 10 PHR) to samples of the masterbatch and the powder is again blended in a Prodex-Henschel blender to form the final compound.

The powder compound is extruded into a continuous sheet using a Haake Rheocord Torque Rheometer Model EU-5 fitted with a Haake Rheomex Model 252 extruder. The Rheomex extruder has an 1,91 cm (0.75 inch) barrel, a single stage 24/1:L/D screw and a 5,08 cm×0,24 cm (2 inch×0.093 inch) slit die. The extruder is run at 20 RPM at zone temperatures of Z1=178°C, Z2=170°C, Z3=177°C and Z4=186°C. The polymer extrusion rate is 18—19 grams/minute.

The extruder sheets from each compound are rated for the amount of undispersed modifier particles using a Biotran II Colony Counter supplied by New Brunswick Scientific Company. This instrument is designed to count bacterial colonies but has been modified to count the gel particle density in the extruded sheets. The modifications included an auxiliary TV camera and a 75 mm telephoto lens with a 14 mm extender.

In each series of dispersion evaluations at least one sample of modifier without a dispersion aid additive is run as a control. In reporting the data, the average of five absolute counts at five locations on each material are reported along with the percent change from the control.

In order to determine whether a given candidate dunkelsperser should be regarded as effective to substantially reduce gel colonies of impact modifier in rigid thermoplastic matrix polymer formulations, and is therefore within the scope of this invention the maximum amount of dunkelsperser, (a) to (b) ratio of 96:4, is compared with the control and a reduction of at least 30% by number is required. Preferred dunkelspersers give a reduction of about 50% and most preferred a reduction of about 80%, ideally about 90% by number.

In the following Examples, the following abbreviations are used:

Methyl methacrylate=MMA
Butyl methacrylate=BMA
Lauryl methacrylate=LMA
Styrene=St
Methyl acrylate=MA
Ethyl acrylate=EA
Butyl acrylate=BA
2-ethyl hexyl acrylate=2-EHA
Methacrylate-butadiene-styrene=MBS
Butylene glycol diacrylate=BDA
Acrylonitrile-butadiene-styrene copolymers=ABS
Tertiary Dodecyl mercaptan=t-DDM

Unless otherwise indicated all of the candidate dunkelspersers in the Examples pass the test set out above.

Examples 1 to 15

In these examples, reported in Table I, varying low molecular dunkelspersers are prepared in emulsion using 4% t-DDM in the above-described procedure. The molecular weights of dunkelspersers ranged from 16,000 to 35,000, depending on monomer used. The emulsion is mixed with an emulsion of a methacrylate-butadiene-styrene (MBS) multiple stage core-shell polymer. The improved impact modifiers containing dunkelsperser are isolated by coagulation. The dunkelsperser is incorporated at a concentration of 1% for some runs, and 3% for other runs. The ratio of improved impact modifier to PVC formulation is 10 to 103. A control is run without dunkelsperser (Example 15). In Examples 1 to 3 gradual increase in candidate dunkelsperser molecular weight results from the increasing monomer chain length to the point where the candidate fails the test given above in Example 3 which is therefore comparative. A similar increase is seen in Examples 5 to 8 but not to the point where the test is failed. The result in Example 3 does not however disqualify poly(lauryl methacrylate) as a suitable dunkelsperser. It merely indicates that the molecular weight of this material must be moderated for good results.

TABLE I

| Example | Dunkelsperser polymer of: | Dispersion rating | | | |
|---------|---------------------------|-------------------|--------|-------------------|----------|
| | | 1% | | 3% | |
| | | Counts | % Change | Counts | % Change |
| 1 | (MMA) (Comparative) | 1347 | 14 | — | — |
| 2 | (BMA) | 820 | 48 | — | — |
| 3 | (LMA) (Comparative) | — | — | 1605 | 0 |
| 4 | (St) | 778 | 50 | — | — |
| 5 | (MA) | — | — | 482 | 69 |
| 6 | (EA) | — | — | 104 | 93 |
| 7 | (BA) | 683 | 56 | 245 | 84 |
| 8 | (2-EHA) | — | — | 1088 | 36 |
| 9 | BA/St:50/50 | 684 | 56 | — | — |
| 10 | MMA/St:50/50 | 786 | 50 | — | — |
| 11 | BMA/St:50/50 | 644 | 59 | — | — |
| 12 | BA/MMA:50/50 | 416 | 73 | — | — |
| 13 | BMA/MMA:50/50 | 978 | 38 | — | — |
| 14 | MA/BMA:50/50 | 680 | 57 | — | — |
| 15 | MBS Control (Comparative test) | 1568 | | | |

Examples 16 to 24

In these examples, the relationship between polymer compositions and molecular weight is explored. A series of low, medium and high molecular weight dunkelspersers was prepared in which the molecular weight was varied by using 4%, 1% and 0% t-dodecyl mercaptan chain transfer agent, respectively. In addition, samples were prepared with the incorporation of·a difunctional crosslinking monomer butyleneglycol diacrylate (BDA) at 0.1%. Dispersion data was obtained in the procedure of the previous examples and are presented in Table II.

Poly-BA and poly-BMA are effective dunkelspersers over the range of molecular weights studied. The effectiveness of butyl acrylate copolymers with MMA and styrene and the styrene homopolymer diminish with increasing molecular weight to the pooint where they are no longer regarded as effective dunkelspersers. This is a similar trend as has been noticed already in Examples 1 to 3 and 5 to 8 and discussed in connection therewith. Similarly poly-MMA does not appear to be effective at high molecular weight.

TABLE II
Effect of additve molecular weight on the dispersion of the MBS modifier in PVC

| Example | Polymer composition | 4% t-DDM | | 1% t-DDM | | 0% t-DDM | | 0.1% BDA | |
|---|---|---|---|---|---|---|---|---|---|
| | | Count | Δ% | Count | Δ% | Count | Δ% | Count | Δ% |
| | | | | 1% Additive on modifier | | | | | |
| 16 | BA | 683 | 56 | 758 | 52 | 1042 | 34 | 871 | 44 |
| 17 | BMA | 820 | 48 | 727 | 54 | 882 | 44 | 847 | 46 |
| 18 | Styrene | 778 | 50 | 960 | 39 | 1202* | 23* | 1532* | 2* |
| 19 | MMA (Comparative) | 1181 | 24* | — | — | 1863 | — | 2104 | — |
| 20 | MBS control (Comparative) | | | | 1560 | | | | |
| | | | | 3% Additive on modifier | | | | | |
| 21 | BA/St | 365 | 79 | 385 | 78 | 518 | 70 | 1017 | 41 |
| 22 | MBS control (Comparative) | | | | 1711 | | | | |
| 23 | BA/MMA | 118 | 92 | 98 | 94 | 219 | 81 | 517 | 66 |
| 24 | MBS control (Comparative) | | | | 1498 | | | | |

* Comparative
Δ% is percent reduction.

Examples 25 to 31

Certain dunkelspersers from Examples 7, 2, 11, 9, 12, and 14 were examined for the effect of the additive level on the dispersion of the MBS modifier in PVC.

All of the samples evaluated show approximately 90% improvement in modifier dispersion at only a 2% additive level which is equivalent to only 0.2% on total PVC compound. The results are reported in Table III.

TABLE III

Effect of additive level on the dispersion of the MBS modifier in PVC

| | | Dispersion, colony counts | | | | | |
| | Dunkelsperser polymer composition | Add @ 1% | | Add @ 2% | | Add @ 3% | |
| Example | | Counts | % Change | Counts | % Change | Counts | % Change |
|---|---|---|---|---|---|---|---|
| 25 | BA | 395 | 66 | 112 | 90 | 49 | 96 |
| 26 | BMA | 424 | 63 | 125 | 89 | 51 | 96 |
| 27 | BMA/St | 313 | 73 | 111 | 90 | 54 | 95 |
| 28 | MA/St | 303 | 74 | 90 | 92 | 57 | 95 |
| 29 | BA/MMA | 198 | 83 | 84 | 93 | 53 | 95 |
| 30 | BA/BMA | 451 | 61 | 113 | 90 | 72 | 94 |
| 31 | MBS control (Comparative) | | | 1160 | | | |

Examples 32 and 33

In the previous examples the low molecular weight additive/MBS emulsion blend was isolated by coagulation, washing and vacuum drying. In these examples the additive/modifier blend (both polymers prepared using sodium lauryl sulfate emulsufier) was isolated by conventional spray drying.

Dispersion data in Table IV shows that the dunkelsperser is indeed effective at improving the dispersionproperties of a spray dried MBS impact modifier, the "level" being the percent dunkelsperser in the total (a) plus (b) composition.

TABLE IV

| | | | Dispersion counts | |
| Example | Dunkelsperser type | Dunkelsperser level | First count | Check count |
|---|---|---|---|---|
| 32 | PBA+3% t-DDM | 0 (Comparative) | 195 | 284 |
| | | 1 | 200 | 114 |
| | | 2 | 50 | — |
| 33 | BA/St/MMA | 0 (Comparative) | 229 | — |
| | 38/58/4 + 1.75% t-DDM | 1 | 23 | — |

Example 34

A dunkelsperser was used in this example to improve an all acrylic type impact modifier designed for improving the toughness of poly(methyl methacrylate). An impact modifier emulsion prepared in accordance with Example 2 of U.S. Patent 3,793,402 was blended with different amounts of a low molecular weight polybutyl acrylate emulsion (3% t-DDM chain transfer agent) given below in percent of total

7

modifier/dunkelsperser on a solids basis and the blend isolated by spray drying. The spray dried powder is subsequently blended with poly(methyl methacrylate) pellets and the blend coextruded into thin sheets. The sheets were examined for the number of gel particles greater than 25 µm per every 19,35 cm² (3 square inches) of sheet. The results of this experiment in Table V show that the low molecular weight poly-BA is indeed an effective dispersion aid in this all-acrylic system.

TABLE V

| Dunkelsperser level | Gel counts (Gels greater than 25 µm per 19,35 cm² (3 square inches)) |
|---|---|
| 0 (Comparative) | 35 |
| 0.8 | 26 |
| 1.7 | 14 |
| 2.5 | 8 |

Example 35

To prepare the dunkelsperser *in situ* the following procedure was followed: 323.3 Parts of impact modifier emulsion (30% solids or 97 parts of polymer solids) were charged to a one-litre four-neck flask fitted with a stirrer, thermometer, nitrogen inlet and condenser. Gradually a 10% solution of an emulsifier was added, preferably the emulsifier used to synthesize the modifier emulsion, to reduce the surface tension of the emulsion to the CMC (critical micelle concentration). (Surface tension is measured using a Du Nouy tensiometer). The emulsion was then heated to 65°C while sweeping with nitrogen. A separate monomer emulsion consisting of 3 parts of monomer, 6 parts of water, 0.03 parts of emulsifier, 0.12 parts of t-dodecyl mercaptan and 0.006 parts of t-butyl hydroperoxide was prepared and charged to the flask, followed immediately by 0.006 parts of sodium formaldehyde sulfoxylate. The tempreature was maintained at 65°C for one hour then cooled, filtered and isolation of product was effected as in previous examples.

**Claims**

1. A composition suitable for impact modifying thermoplastic polymer, comprising a blend of (a) elastomeric impact modifier polymer and (b) polymer, other than methyl methacrylate homopolymer, of at least one of the following monomers: esters of acrylic and methacrylic acids, vinyl aromatic monomers such as styrene and substituted styrenes, olefins and esters of unsaturated organic acids, in a weight ratio of (a) to (b) of 99.5:0.5 to 96.4, said component (b) being effective to substantially reduce gel colonies of impact modifier in formulations with rigid thermoplastic matrix polymer.

2. A composition as claimed in Claim 1 wherein said component (b) comprises one or more of the following polymers: poly(butyl acrylate), poly(butyl methacrylate), poly(butyl methacrylate/styrene), poly(butyl acrylate/styrene), poly(butyl acrylate/methyl methacrylate), poly(butyl acrylate/butyl methacrylate), and poly(ethyl acrylate).

3. A composition as claimed in any preceding claim in the form of (i) a mixture of emulsions of components (a) and (b) or in the form of (ii) a powder which has been isolated by spray drying or coagulation from a mixture of emulsions of components (a) and (b).

4. A composition as claimed in any preceding claim wherein component (a) comprises one or more of the following polymers: methacrylate/butadiene/styrene, acrylonitrile/butadiene/styrene, alkyl acrylate/ alkyl methacrylate, alkyl acrylate/styrene/acrylonitrile, acrylic elastomer-based core shell polymers, and mixed acrylic-butadiene-based elastomer core-shell polymers.

5. A composition as claimed in any preceding claim wherein the weight ratio of the component (a) to component (b) is 99:1 to 97:3.

6. A blend of impact modifier composition as claimed in any preceding claim and rigid matrix polymer, the weight ratio of rigid matrix polymer to said impact modifier composition being 60:40 to 98:2.

7. A blend as claimed in Claim 6 wherein the rigid matrix polymer comprises one or more of the following polymers: vinyl chloride homopolymer and copolymers, methyl methacrylate homopolymer and copolymers, thermoplastic polyesters, acrylonitrile/butadiene/styrene copolymers, high impact polystyrene, polycarbonate and glutarimide homopolymers and copolymers.

8. A process for preparing a composition as claimed in any of claims 1 to 5 comprising intimately mixing component (a) and component (b) in the appropriate weight ratio by mixing emulsions thereof and coisolating the mixed components by spray drying or coagulation.

9. A process as claimed in claim 8 wherein the mixture of emulsions is formed by forming component (b) by emulsion polymerisation in the presence of component (a) as an emulsion polymer product.

**Patentansprüche**

1. Masse, die für die Schlagfestigkeitsmodifizierung von thermoplastischem Polymeren geeignet ist, aus einer Mischung aus (a) einem elastomeren Schlagfestigkeits-modifizierungs-Polymeren und (b) einem anderen Polymeren als Methylmethacrylat-Homopolymerem aus wenigstens einem der folgenden Monomeren: Estern von Acrylsäure und Methacrylsäure, vinylaromatischen Monomeren, wie Styrol und substituierten Styrolen, Olefinen und Estern von ungesättigten organischen Säuren, in einem Gewichtsverhältnis von (a) zu (b) von 99,5:0,5 bis 96:4, wobei die Komponente (b) wirksam ist, um erheblich Gelkolonien des Schlagfestigkeitsmodifizierungsmittels in Formulierungen mit einem steifen thermoplastischen Matrixpolymeren herabzusetzen.

2. Masse nach Anspruch 1, dadurch gekennzeichnet, daß die Komponente (b) aus einem oder mehreren der folgenden Polymeren besteht: Poly(butylacrylat), Poly(butylmethacrylat), Poly(butyl-methacrylat/styrol), Poly(butylacrylat/styrol), Poly(butylacrylat/methylmethacrylat), Poly(butylacrylat/butyl-methacrylat) und Poly(ethylacrylat).

3. Masse nach einem der vorhergehenden Ansprüche in Form (i) einer Mischung von Emulsionen der Komponenten (a) und (b) oder in Form (ii) eines Pulvers, das durch Sprühtrocknen des Koagulieren aus einer Mischung von Emulsionen aus den Komponenten (a) und (b) isoliert worden ist.

4. Masse nach einem der vorhergehenden Ansprüche, dadurch gekennzeichnet, daß die Komponente (a) aus einem oder mehreren der folgenden Polymeren besteht: Methacrylat/Butadien/Styrol, Acrylnitril/Butadien/Styrol, Alkylacrylat/Alkylmethacrylat, Alkylacrylat/Styrol/Acrylnitril, Kern/Schale-Polymeren auf Acrylelastomerbasis und gemischten Kern/Schale-Polymeren auf Acryl/Butadien-Basis.

5. Masse nach einem der vorhergehenden Ansprüche, dadurch gekennzeichnet, daß das Gewichtsverhältnis der Komponente (a) zu der Komponente (b) 99:1 bis 97:3 beträgt.

6. Mischung einer Schlagfestigkeitsmodifizierungsmasse gemäß einem der vorhergehenden Ansprüche und einem steifen Matrixpolymeren, wobei das Gewichtsverhältnis des steifen Matrixpolymeren zur der Schlagfestigkeitsmodifizierungsmasse 60:40 bis 98:2 beträgt.

7. Mischung nach Anspruch 6, dadurch gekennzeichnet, daß das steife Matrixpolymere aus einem oder mehreren der folgenden Polymeren besteht: Vinylchlorid-Homopolymeren und -copolymeren, Methylmethacrylat-Homopolymeren und -copolymeren, thermoplastischen Polyestern, Acrylnitril/Butadien/Styrol-Copolymeren, hochschlagfestem Polystyrol, Polycarbonat- und Glutarimid-Homopolymeren und -copolymeren.

8. Verfahren zur Herstellung einer Masse gemäß einem der Ansprüche 1 bis 5, dadurch gekennzeichnet, daß innig die Komponente (a) und die Komponenten (b) in dem entsprechenden Gewichtsverhältnis durch Vermischen von Emulsionen davon vermischt werden und die gemischten Komponenten durch Sprühtrocknen oder durch Koagulieren gemeinsam isoliert werden.

9. Verfahren nach Anspruch 8, dadurch gekennzeichnet, daß die Mischung der Emulsionen gebildet wird durch Bilden der Komponente (b) durch Emulsionspolymerisation in Gegewart der Komponente (a) als Emulsionspolymerprodukt.

**Revendications**

1. Une composition propre à modifier la résistance au choc d'un polymère thermoplastique comprenant un mélange de (a) un polymère élatomère modifiant la résistance au choc et (b) un polymère, autre que l'homopolymère de méthacrylate de méthyle, d'au moins un des monomères suivants: esters d'acides acrylique et méthacrylique, monomères vinyliques aromatiques tels que le styrène et les styrènes substitués, oléfines et esters d'acides organiques insaturés, dans un rapport pondéral de (a) à (b) de 99,5/0,5 à 96/4, ledit composant (b) étant efficace pour réduire notablement les colonies de gel du modificateur de la résistance au choc dans les compositions avec un polymère de matrice thermoplastique rigide.

2. Une composition comme revendiqué dans la revendication 1 dans laquelle ledit composant (b) comprend un ou plusieurs des polymères suivants: poly(acrylate de butyle), poly(méthacrylate de butyle), poly(méthacrylate de butyle/styrène), poly(acrylate de butyle/styrène), poly(acrylate de butyle/méthacrylate de méthyle), poly(acrylate de butyle/méthacrylate de butyle) et poly(acrylate d'éthyle).

3. Une composition comme revendiqué dans l'une quelconque des revendications précédentes sous forme de (i) un mélange d'émulsions des composants (a) et (b) ou sous forme de (ii) une poudre que l'on a isolée par séchage par pluvérisation ou coagulation à partir d'un mélange d'émulsions des composants (a) et (b).

4. Une composition comme revendiqué dans l'une quelconque des revendications précédentes dans laquelle le composant (a) comprend un ou plusieurs des polymères suivants: métha-crylate/butadiène/styrène, acrylonitrile/butadiène/styrène, acrylate d'alcoyle/méthacrylate d'alcoyle, acrylate d'alcoyle/styrène/acrylonitrile, polymères de type centre-enveloppe à base d'élastomère acrylique et polymères de type centre-enveloppe d'élastomère mixte à base d'acryllique-butadiène.

5. Une composition comme revendiqué dans l'une quelconque des revendications précédentes dans laquelle le rapport pondéral du composant (a) au composant (b) est de 99/1 à 97/3.

6. Un mélange de composition modifiant la résistance au choc comme revendiqué dans l'une quelconque des revendications précédentes et d'un polymère de matrice rigide, le rapport pondéral du polymère de matrice rigide à ladite composant de modification de la résistance au choc étant de 60/40 à 98/2.

7. Un mélange comme revendiqué dans la revendication 6 dans lequel le polymère de matrice rigide comprend un ou plusieurs des polymères suivants: homopolymère et copolymères de chlorure de vinyle, homopolymère et copolymères de méthacrylate de méthyle, polyesters thermoplastiques, copolymères d'acrylonitrile/butadiène/styrène, polystyrène choc, polycarbonate et homopolymères et copolymères de glutarimide.

8. Un procédé pour la préparation d'une composition comme revendiqué dans l'une quelconque des revendications 1 à 5 comprenant le mélange intime du composant (a) et du composant (b) dans le rapport pondéral approprié par mélange d'émulsions de ceux-ci et le coïsolement des composants mélangés par séchage par pulvérisation ou coagulation.

9. Un procédé comme revendiqué dans la revendication 8 dans lequel le mélange des émulsions est formé par formation du composant (b) par polymérisation en émulsion en présence du composant (a) constituant un produit polymère d'émulsion.

## FIG.1.

EXAMPLE 6

## FIG.2.

EXAMPLE 15